(19) **Europäisches Patentamt / European Patent Office / Office européen des brevets**

(11) **EP 3 301 818 B1**

(12) **EUROPEAN PATENT SPECIFICATION**

(45) Date of publication and mention
of the grant of the patent:
**06.11.2019 Bulletin 2019/45**

(51) Int Cl.:
*H04B 1/10* (2006.01)          *H04B 7/06* (2006.01)
*H04B 7/08* (2006.01)

(21) Application number: **16191775.2**

(22) Date of filing: **30.09.2016**

(54) **A RECEIVER, A METHOD FOR CONTROLLING A RECEIVER, AND A MOBILE COMMUNICATIONS DEVICE**

EMPFÄNGER, VERFAHREN ZUR STEUERUNG EINES EMPFÄNGERS UND MOBILKOMMUNIKATIONSVORRICHTUNG

RECEPTEUR, PROCEDE DE COMMANDE D'UN RECEPTEUR ET DISPOSITIFS DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.04.2018 Bulletin 2018/14**

(73) Proprietor: **Intel IP Corporation
Santa Clara, CA 95054 (US)**

(72) Inventors:
• **RUEBSAMEN, Michael
85579 Neubiberg (DE)**

• **WEHINGER, Joachim
82008 Unterhaching (DE)**

(74) Representative: **Viering, Jentschura & Partner mbB
Patent- und Rechtsanwälte
Am Brauhaus 8
01099 Dresden (DE)**

(56) References cited:
**WO-A1-2013/181823          US-A1- 2011 075 601
US-A1- 2013 102 254          US-A1- 2015 092 621**

## Description

## Technical Field

Various embodiments relate generally to a receiver, a method for controlling a receiver, and a mobile communications device.

## Background

In modern wireless communication systems, throughput performance of a mobile communications device is often limited by interference. A number of techniques to mitigate throughput degradation due to interference have been contemplated. Two prominent classes of interference mitigation techniques are beamforming and interference cancellation.

Beamformers are spatial filters that suppress interferers by exploiting the fact that a signal source and an interferer source (or sources) have different spatial signatures. In contrast, interference cancellation techniques detect the interferer symbols, reconstruct the interferer waveforms, and subtract the interferer components from the received waveforms. Interference cancellation techniques generally suppress interference better than spatial filters, however, interference cancellation requires a higher computational complexity and higher power consumption than application of a spatial filter.

Especially in mobile communication devices, power consumption is a critical parameter, and, so much so, that advanced receiver functionalities to suppress other types of distortions (e.g., enhanced spatial filter techniques) are often deactivated when interference cancellation is active. Accordingly, it would be advantageous if a mobile communications device were able to address various types of distortion with a tailored response, taking throughput performance and computational power into account.

U.S. App. No. 2015/0092621 discusses: a multiple input multiple output (MIMO) antenna system implemented for communications in a wireless device. MIMO beamforming techniques are utilized to improve communications, and may be utilized in full-duplex mode. Techniques include the formation of beamforming patterns having orthogonal polarizations to one another at each communication device, but having matching polarization between transmit/receive pairs located at each respective communication device. Techniques also include the formation of beamforming patterns in a direction towards another communication device to maximize transmit power in that direction while inducing nulls in the beamforming pattern to reduce self-interference coupling via antennas configured for reception. Full-duplex communications are improved through monitoring of the self-interference coupling and adapting the beamforming patterns to reduce it. Beamforming vectors may be generated by solving a cost function that may include an additional constraint of reduction of self-interference coupling.

## Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:

FIG. 1A shows a mobile communications device in a network.
FIG. 1B shows a schematic of a mobile communications device.
FIG. 2A shows a diagram of a mobile communications device subject to structured interference.
FIG. 2B shows a diagram of a scenario with multiple mobile communications devices.
FIG. 3 shows a diagram of structured self-interference.
FIG. 4 shows a diagram of non-structured interference.
FIG. 5 shows a diagram illustrating a method for controlling a receiver.
FIG. 6 shows a diagram illustrating a method for controlling a receiver.

## Description

The present invention is defined by the features of the independent claims.

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

As used herein, a "circuit" may be understood as any kind of logic (analog or digital) implementing entity, which may be special purpose circuitry or a processor executing software stored in a memory, firmware, hardware, or any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, for example any kind of computer program, for example a computer program using a virtual machine code such as, for example, Java. Any other kind of implementation of the respective functions which will be described in more detail below may also be understood as a "circuit". It is understood that any two (or more) of the described circuits may be combined into a single circuit with substantially equivalent functionality, and, conversely, that any single described circuit may be distributed into two (or more) separate circuits with substantially equivalent functionality. In particular with respect to the use of "circuitry" in the Claims included herein, the use of "circuit" may be understood as collectively referring to two or more circuits.

A "processing circuit" (or equivalently, "processing circuitry") as used herein, is understood as referring to any circuit that performs an operation(s) on signal(s), such as, e.g., any circuit that performs processing on an electrical signal or an optical signal. A processing circuit may thus refer to any analog or digital circuitry that alters a characteristic or property of an electrical or optical signal, which may include analog data, digital data, or a combination thereof. A processing circuit may thus refer to an analog circuit (explicitly referred to as "analog processing circuit(ry)"), digital circuit (explicitly referred to as "digital processing circuit(ry)"), logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Accordingly, a processing circuit may refer to a circuit that performs processing on an electrical or optical signal as hardware or as software, such as software executed on hardware (e.g., a processor or microprocessor). As utilized herein, "digital processing circuit(ry)" may refer to a circuit implemented using digital logic that performs processing on a signal, e.g., an electrical or optical signal, which may include logic circuit(s), processor(s), scalar processor(s), vector processor(s), microprocessor(s), controller(s), microcontroller(s), Central Processing Unit(s) (CPU), Graphics Processing Unit(s) (GPU), Digital Signal Processor(s) (DSP), Field Programmable Gate Array(s) (FPGA), integrated circuit(s), Application Specific Integrated Circuit(s) (ASIC), or any combination thereof. Furthermore, it is understood that a single processing circuit may be equivalently split into two separate processing circuits, and conversely that two separate processing circuits may be combined into a single equivalent processing circuit.

As used herein, "memory" may be understood as an electrical component in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the term "memory". It is appreciated that a single component referred to as "memory" or "a memory" may be composed of more than one different type of memory, and thus may refer to a collective component comprising one or more types of memory. It is readily understood that any single memory component may be separate multiple collectively equivalent memory components, and vice versa. Furthermore, it is appreciated that while memory may be depicted, such as in the drawings, as separate from one or more other components, it is understood that memory may be integrated within another component, such as on a common integrated chip.

As used herein, a "cell", in the context of telecommunications, may be understood as a sector served by a base station. Accordingly, a cell may be a set of geographically co-located antennas that correspond to a particular sector of a base station. A base station may thus serve one or more "cells" (or "sectors"), where each cell is characterized by a distinct communication channel. An "inter-cell handover" may be understood as a handover from a first "cell" to a second "cell", where the first "cell" is different from the second "cell". "Inter-cell handovers" may be characterized as either "inter-base station handovers" or "intra-base station handovers". "Inter-base station handovers" may be understood as a handover from a first "cell" to a second "cell", where the first "cell" is provided at a first base station and the second "cell" is provided at a second, different, base station. "Intra-base station handovers" may be understood as a handover from a first "cell" to a second "cell", where the first "cell" is provided at the same base station as the second "cell". A "serving cell" may be understood as a "cell" that a mobile terminal is currently connected to according to the mobile communications protocols of the associated mobile communications network standard. Furthermore, the term "cell" may be utilized to refer to any of a macrocell, microcell, picocell, or femtocell, etc.

The term "base station", used in reference to an access point of a mobile communications network, may be understood as a macro-base station, micro-base station, Node B, evolved Node B (eNodeB, eNB), Home eNodeB, Remote Radio Head (RRH), or relay point, etc.

As used herein, a "cellular radio technology" may be a Cellular Wide Area radio communication technology, which may include, e.g., a Global System for Mobile Communications (GSM) radio communication technology, a General Packet Radio Service (GPRS) radio communication technology, an Enhanced Data Rates for GSM Evolution (EDGE) radio communication technology, and / or a Third Generation Partnership Project (3GPP) radio communication technology (e.g., UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System-Time-Division Duplex), TD-CDMA (Time Division-Code Division Multiple Access), TD-CDMA (Time Division-Synchronous Code Division Multiple Access), 3GPP Rel. 8 (Pre-4G) (3rd Generation Partnership Project Release 8 (Pre-4th Generation)), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handyphone System), WiDEN (Wideband Integrated Digital Enhanced Network), iBurst, Unlicensed Mobile Access (UMA, also referred to as also referred to as 3GPP Generic Access Network, or GAN standard)).

As used herein, a "short range radio technology" may include, e.g., a Worldwide Interoperability for Microwave Access (WiMax) (e.g., according to an IEEE 802.16 radio communication standard, e.g., WiMax fixed or WiMax mobile), WiPro, HiperMAN (High Performance Radio Metropolitan Area Network), IEEE 802.16m Advanced Air Interface, a Bluetooth radio communication technology, e.g., Bluetooth Low Energy Long Range, an Ultra-Wide Band (UWB) radio communication technology, and / or a Wireless Local Area Network radio communication technology (e.g., according to an IEEE 802.11 (e.g., IEEE 802.11n) radio communication standard)), IrDA (Infrared Data Association), Z-Wave and Zig-Bee, HiperLAN/2 ((HIgh PErformance Radio LAN; an alternative ATM-like 5 GHz standardized technology), IEEE 802.11a (5 GHz), IEEE 802.11g (2.4 GHz), IEEE 802.1 In, and IEEE 802.11VHT (VHT=Very High Throughput).

It is to be noted the ensuing description discusses utilization of the mobile communications device under 3GPP (Third Generation Partnership Project) specifications, notably Long Term Evolution (LTE) and Long Term Evolution-Advanced (LTE-A). Other mobile radio communications systems, however, may be used, where applicable. The examples provided herein can apply to other existing, or other not yet formulated standards, so long as they share the underlying features disclosed in the following examples.

As discussed above, a mobile communications device may counteract different signal distortions with various techniques tailored to the type of distortion, e.g., structured or non-structured interference. In addressing signal distortion, a standard solution is to activate interference cancellation whenever there are interferers (e.g., structured interference), and to employ advanced spatial filtering techniques whenever structured interference levels are negligible. This may lead to frequent activation of the computationally-complex interference cancellation without significant throughput gains. In some situations, however, computationally-efficient spatial filters (e.g., beamformers) may provide sufficient interferer suppression, and throughput gains may also be achieved by suppressing structured self-interference rather than interference from other sources (e.g., structured extrinsic interference). To activate the most beneficial receiver functionalities without wasting energy, e.g., a battery of a mobile communications device, a receiver of a mobile communications device may first apply a spatial filter to a desired signal (e.g., a received signal), and then analyze the output of the signal after applying the spatial filter to determine if further throughput gains may be achieved by either interference cancellation or by reducing self-interference. Thus, the receiver may be configured to intelligently and efficiently counteract signal distortion, e.g., activate interference cancellation or self-interference reduction based on a determined source of the interference.

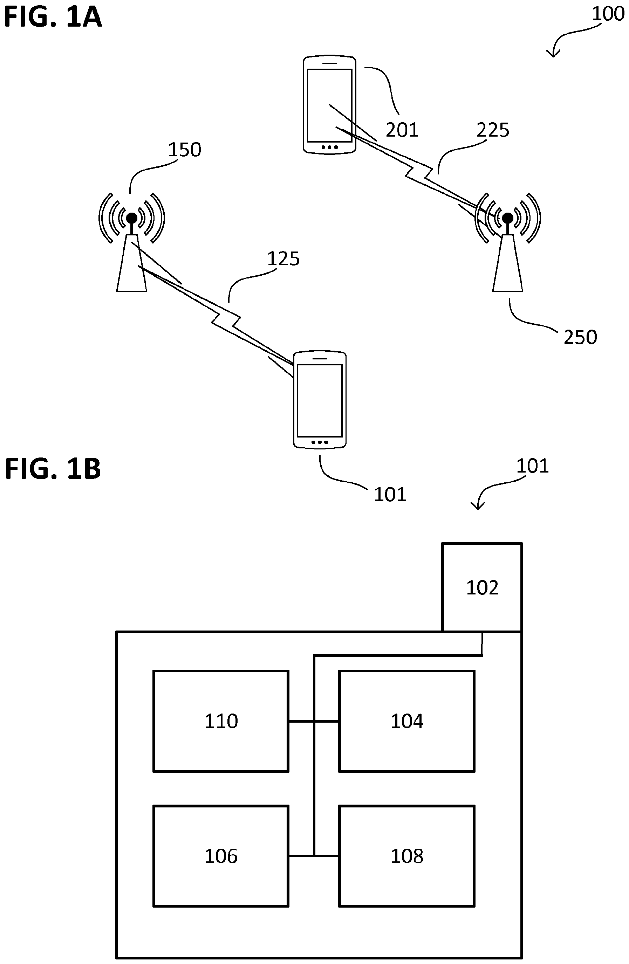

FIG. 1A shows a mobile communications network 100 with a mobile communications device 101 according to an aspect of the disclosure. Mobile communications network 100 may be for a cellular radio technology or a short range radio technology. A mobile communications device 101, e.g., user equipment (UE), may be connected via a first radio connection 125 to a first base station 150. Likewise, another mobile communications device 201 may be connected via a second radio connection 225 to a second base station 250. Base station 125 and base station 225 may be part of the same or may be parts of different networks, e.g., the same or a different public land mobile network (PLMN). In another aspect of the disclosure, first base station 150 and / or second base station 250 may be a UE.

FIG. 1B shows a schematic of a mobile communications device, e.g., mobile communications device 101. In an aspect of the disclosure, mobile communications device 101 may include an antenna 102, a receiver 110, a transmitter 104, a processor 106 (e.g., a processing circuit), and a subscriber identity module (SIM) 108.

SIM 108 may be configured to allow mobile communications device 101 to operate on a network, e.g., a PLMN, associated with SIM 108. Mobile communications device 101 may also be a multi-SIM device, for example having two or more SIMs, with each SIM operating on different networks. Additionally or alternatively, one or more SIMs may operate on the same network.

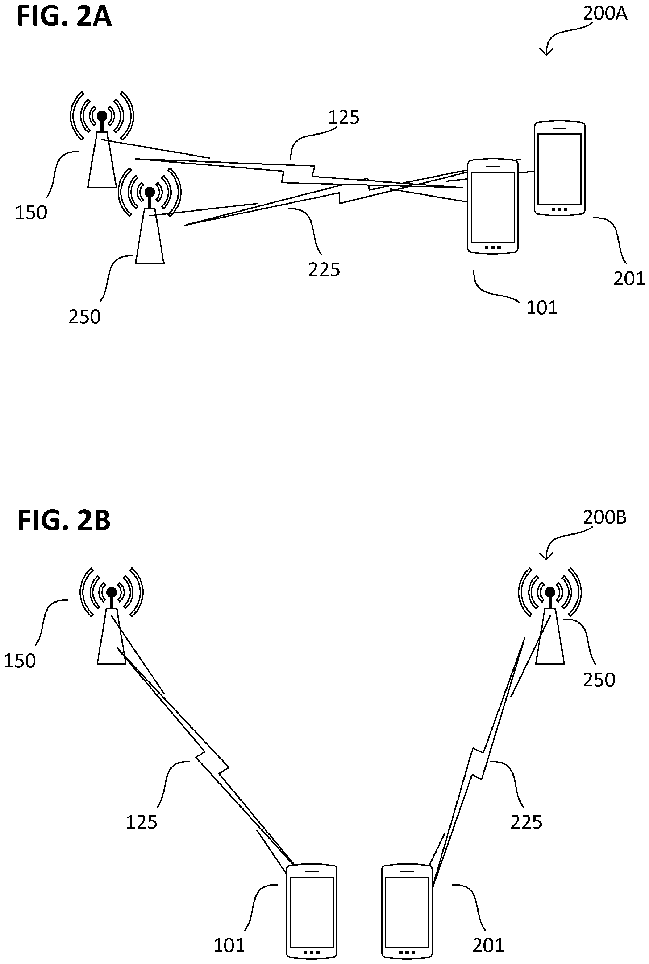

Antenna 102 may be a single antenna or an antenna array. In addition, antenna 102 may include one or more antennas for differing radio technologies in mobile communications device 101. Receiver 110 and transmitter 104 may utilize antenna 102 to transmit and receive signals. Receiver 110 and transmitter 104 may be discrete circuits as shown in FIG. 2, or may be combined (e.g., integral) as a transceiver. Receiver 110 and transmitter 104 may include or may also be a baseband modem, which may process, e.g., modulate and demodulate information for communication as wireless signals.

In an aspect of the disclosure, receiver 110 may be configured to: receive a signal (e.g., from base station 150 via first radio connection 125); apply a spatial filter to the signal; measure interference of the signal after applying the spatial filter; determine if the interference is above a predetermined threshold; determine a source of the interference when the interference is above the predetermined threshold from at least one of a non-structured interference, a structured self-interference, and a structured extrinsic interference; and counteract the interference with a signal-processing mode corresponding to the previously determined source of the interference, wherein the signal-processing mode associated with counteracting the structured self-interference consists essentially of an enhanced spatial filter, demodulation, and decoding and wherein the signal-processing mode associated with counteracting the structured extrinsic interference consists essentially of interference cancellation by techniques that detect interferer symbols, reconstruct interferer waveforms, and subtract interferer components from received waveforms; demodulation; and decoding. Therefore, receiver 110 may employ techniques for activating advanced receiver functionalities to improve throughput performance without wasting energy.

For example, receiver 110 may compute a spatial filter for a desired signal, such as an incoming signal from base station 150. Based on several parameters, receiver 110 may detect if distortions at the spatial filter output are dominated by structured extrinsic interference (e.g., a signal from second radio connection 225), structured self-interference (e.g., a multipath component of the signal from first radio connection 125), or non-structured interference (e.g., noise). If structured interference from an extrinsic source dominates, receiver 110 may apply interference cancellation. In contrast, if structured self-interference dominates, enhanced spatial filter techniques may be activated to reduce the self-interference. Finally, if non-structured interference dominates, neither interference cancellation nor self-interference reduction techniques may be applied, which avoids unnecessary power consumption. Avoiding unnecessary power consumption may be advantageous in mobile communications devices, as it may reduce power consumption.

Accordingly, receiver 110 may activate interference cancellation or enhanced spatial filter techniques in the following scenarios. It is noted, these techniques are first applied after the intended incoming signal has been output from the spatial filter and it is determined throughput of the signal may additionally be improved (e.g., a level of the interference may be above a predetermined threshold level). Therefore, rather than simply applying interference cancellation for an interference level above some threshold, a spatial filter is first applied to the signal, then measured for interference, and, subsequently, advanced receiver techniques may be utilized based on the following determinations.

In these scenarios, interference cancellation may provide substantial throughput gains, even if a power of the interference is low. For example, interference cancellation may be activated when there are strong interferers, e.g., if the interference is beyond another predetermined threshold (e.g., a first predetermined threshold), which may be beyond a threshold level of the determination if the signal has an acceptable interference level after the spatial filter is applied to the signal. Additionally or alternatively, interference cancellation may be activated by receiver 110 if the sensitivity to model errors of the spatial filter is high, e.g., beyond a second predetermined threshold. This trigger for interference cancellation may be beneficial when the spatial filter is not able to properly suppress (at least) one interferer, for example, when the angular spread between the desired signal and a structured extrinsic interference source is small.

FIG. 2A and FIG. 2B may illustrate where the sensitivity to model errors may be high. In diagram 200A, mobile communications device 101 may often operate in an environment where other communications devices operate, in which, radio signals from other devices may interfere with a signal received via first radio connection 125. For example, even though a signal of first radio connection 125 (including uplink and downlink in either direction between mobile communications device 101 and first base station 150) may only be intended to be received by mobile communications device 101, the signal for the first radio connection 125 may also be received by the other mobile communications device 201. Similarly, second base station 250 may also be sending a signal of the second radio connection 225 to the other mobile communications device 201, which may be received by mobile communications device 101. Accordingly, mobile communications device 101 may receive both the signal from first radio connection 125 and, in the form of structured extrinsic interference, the signal from the second radio connection 225.

As may be illustrated in diagram 200A mobile communications device 101 and the other mobile communications device 201 may be aligned in such a way that the direct pathways of first radio connection 125 and the second radio connection 225, respectively, may effectively be the same pathway or have a small, e.g., acute, angular spread between the first radio connection 125 and the second radio connection 225. In this case, the structured extrinsic interference may be arriving at mobile communications device 101 from an effectively indistinguishable spatial direction, so that interference cancellation may be more effective than enhanced spatial filter techniques.

In contrast, diagram 200B may show a scenario where the angular spread between first radio connection 125 and second radio connection 225 may be greater, e.g., obtuse, so that a spatial filter may be more effective in counteracting the structured extrinsic interference. In this scenario, the sensitivity to model errors would be lower as the scenario in diagram 200A.

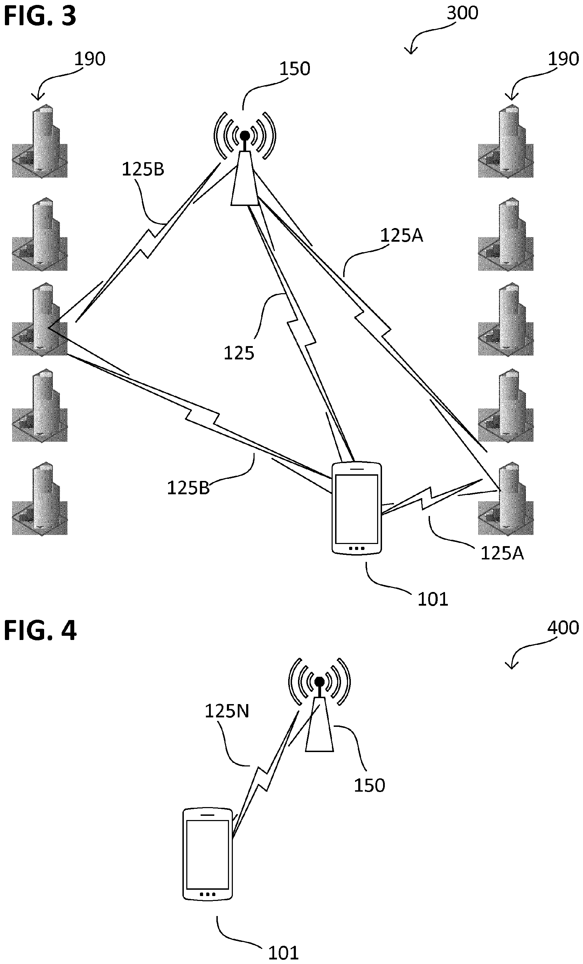

FIG. 3 may show a scenario with structured self-interference. A signal for the first radio connection 125 may have a direct (e.g., line of sight) pathway between first base station 150 and mobile communications device 101. Thus, the signal may be transmitted and received directly by mobile communications device 101. However, mobile communications device 101 may be in environment with surfaces 190 that may reflect the signal of first radio connection 125, e.g., multipath components. Accordingly, a reflection of the signal 125A and another reflection of the signal 125B may also be received by receiver 110 of mobile communications device 101. Reflections 125A and 125B may have effectively the same waveform as the direct path signal of first radio connection 125, however, due to the longer pathways, the reflections 125A and 125B may arrive at different times than the original signal, e.g., later than original signal propagating along a more direct path.

For example, mobile communications device 101 may receive data unit 1, data unit 2, and data unit 3, which are received at $t_0$, $t_1$, and $t_2$, respectively. At $t_0$, mobile communications device 101 may receive data unit 1, as it may travel along a direct propagation pathway. At $t_1$, data unit 2 may be received, and, in addition, data unit 1 may be received again via reflection 125A. Reflection 125A may be in the form of structured self-interference with respect to the reception of data unit 2. Similarly, at $t_2$, data unit 3 may be received, and, in addition, data unit 1 may be received again via reflection 125B, as well as a reflection of data unit 2, as structured self-interference.

Accordingly, enhanced beamforming techniques may be employed to counteract multipath components, e.g., reflections 125A and 125B, causing structured self-interference. The structured self-interference may be detected by estimating and comparing the total power of the distortions of the signal with the power of the structured self-interference component. The structured self-interference power may be based on channel estimates, beamformer weights, and statistics of channel estimation errors. At the same time, the total power of distortions can be estimated from pilot symbols. If the structured self-interference power is comparable to the total power of the distortions, e.g., within a predetermined deviation, this may function as a trigger for the enhanced spatial filter techniques to be activated to reduce the structured self-interference. By using this criteria, the source of the interference may be taken into account, and the appropriate counteraction may be employed, thus avoiding unnecessary activation of interference cancellation.

Additionally, the diagram 400 shows non-structured interference illustrated in FIG. 4. Here, the signal of first radio connection 125 may not be subject to any structured interference from base station 150 to mobile communications device 101. The signal may only be subject to noise 125N, for which interference cancellation or enhanced spatial filter techniques would not substantially improve throughput. Accordingly, decoding and demodulation techniques may be applied to the received signal without advanced receiver techniques.

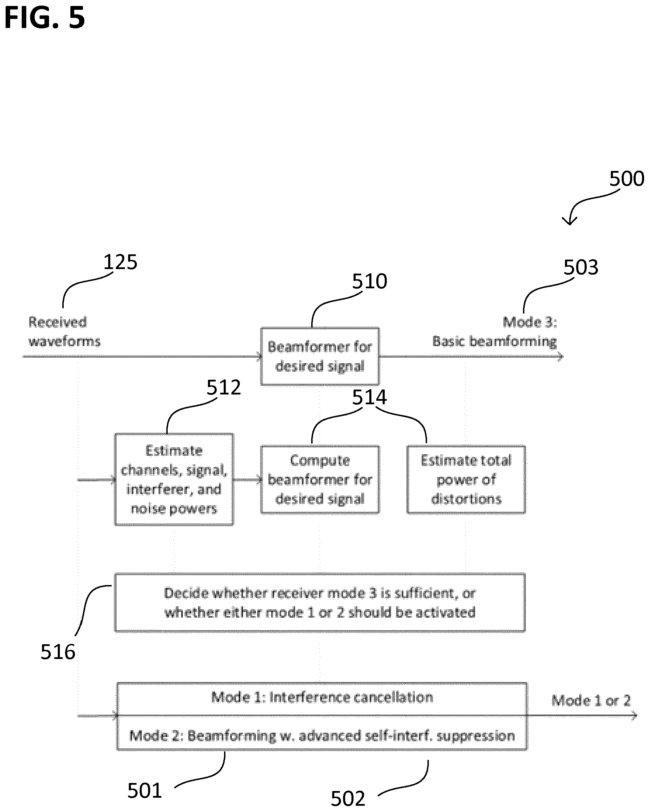

The criteria discussed above for the identification of scenarios where interference cancellation and / or enhanced spatial filter techniques will be discussed in greater detail below, in conjunction with diagram 500 of FIG. 5. Diagram 500 may illustrate the architecture of receiver 110. The received signal (e.g., waveforms) of first radio connection 125 may be input into a spatial filter 510 (e.g., a beamformer with one waveform for each receive antenna) and are first filtered to suppress structured interference and noise components. Spatial filter 510 may utilize a linear minimum-mean-square-error (LMMSE) beamformer with a reconstructed sample covariance matrix. To reconstruct the sample covariance matrix, the channel impulse responses and powers may be estimated for the desired signal and structured interferers in 512, as well as an estimate of the noise power.

After applying the spatial filter, the remaining total power of distortion is estimated based on the pilot signals from the desired signal in 514. Based on these parameters, the source of the distortion, e.g., at least one of non-structured interference, structured self-interference, and structured extrinsic interference, may be determined and accordingly counteracted in 516. Accordingly, if it is determined a structured interference dominates, interference cancellation 501 (mode 1) or enhanced spatial filter techniques 502 (mode 2) may be activated. However, if non-structured interference dominates at the output of spatial filter 510, the beamformed output is used for subsequent demodulation and decoding without the advanced receiver functionalities.

Thus, in order to identify the source of the distortion, receiver 110 may use the following parameters: an estimate of the desired signal power and the structured interference power, which may be obtained by estimating the received powers of source pilots or by applying a spatial filter to all incoming signals; the channel estimate of the desired signal (e.g., information regarding the scattering, fading, and power decay of the signal over a propagation distance); estimates of channel estimation error statistics for the desired signal; the spatial filter weight vector; and an estimate of the total power of distortions at the spatial filter output.

Accordingly, using these parameters, interference cancellation may be activated in the following scenarios. If receiver 110 determines there is a strong structured interference signal, i.e., if the signal-to-interference ratio (SIR) may be below the first predetermined threshold for at least one interferer, in which case, enhanced spatial filter techniques may not provide sufficient interference suppression, then the signal-processing mode may include interference cancellation.

Additionally or alternatively, if the signal after the applying the spatial filter has a poor robustness, i.e., has a higher sensitivity to model errors, then the signal-processing mode may include interference cancellation. As discussed above, the sensitivity to model errors may be higher when one or more of the structured interferences is difficult to suppress with a spatial filter as the angular distance between the source of the desired signal and at least one interferer may be small. The spatial filter sensitivity to arbitrary type model error may be defined as:

$$T = \frac{||w||^2}{|w^H a|^2}$$

where w is the spatial filter weight vector, $w^H$ is the Hermitian of the spatial filter weight vector (e.g., the conjugate transpose of the spatial filter weight vector), and $a$ is the steering vector towards the desired signal, e.g., a signal of first radio connection 125. The steering vector may be derived from the channel estimate for the desired signal, e.g., as discussed by H. Cox, R. Zeskind, and M. Owen, Robust Adaptive Beamforming, IEEE Trans. Acoust. Speech, Signal Process., vol. 35, no. 10, pp. 1365-1376, 1987.

Alternatively, interference cancellation may not be activated if distortions at the output of the spatial filter are dominated by structured self-interference. The total power of distortions may be estimated by pilot symbols of the desired signal. An estimate of the structured self-interference power may be obtained by multiplying the input power of the desired signal with the squared Euclidean norm of the channel-equalizer-cascade, excluding the main tap of the cascade, e.g., reception of the desired signal via a direct path. This estimate of the structured self-interference power may be additionally refined by taking into account the statistics of channel estimation errors, in which case, the computation may depend on the actual channel estimator. Accordingly, if structured self-interference dominates distortions at the spatial filter output, receiver 110 may activate enhanced spatial filter techniques to suppress the structured self-interference.

The enhanced spatial filter techniques may include at least one of: reducing approximation errors in the computation of spatial filter weights, activating improved channel estimation techniques, and increasing the beamformer length for space-time signal processing. These and equivalent techniques may be applicable here. It should also be noted these techniques may be applied in the time domain, as well as in the frequency domain. The aspects of the disclosure may not increase computation complexity as most interference cancellation techniques already include a spatial filter for the desired signal, and enhanced methods to reduce structured self-interference may utilize already computed spatial filter weights for the desired signal from the application of the spatial filter.

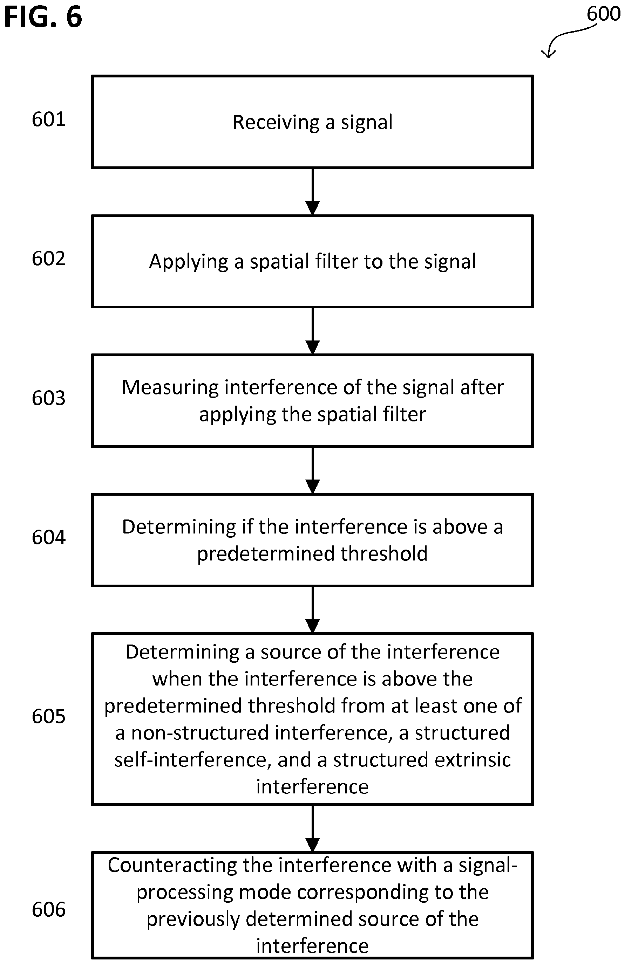

Thus, in accordance with the above, FIG. 6 may show a method 600 for controlling receiver 110. Method 600 may include additional steps consistent with the aspects of this disclosure. In addition, method 600 may be implemented by any means consistent with this disclosure that may perform the functions of method 600. The method 600 may include: in 601, receiving a signal; in 602, applying a spatial figure to the signal; in 603, measuring interference of the signal after applying the spatial filter (e.g., the spatial filter may be applied before measuring the interference); in 604, determining if the interference is above a predetermined threshold; in 605, determining a source of the interference when the interference is above the predetermined threshold from at least one of a non-structured interference, a structured self-interference, and a structured extrinsic interference; and in 606, counteracting the interference with a signal-processing mode corresponding to the previously determined source of the interference, wherein the signal-processing mode associated with counteracting the structured self-interference consists essentially of an enhanced spatial filter, demodulation, and decoding and wherein the signal-processing mode associated with counteracting the structured extrinsic interference consists essentially of interference cancellation by techniques that detect interferer symbols, reconstruct interferer waveforms, and subtract interferer components from received waveforms; demodulation; and decoding.

Accordingly, in method 600, the signal-processing mode associated with counteracting the structured self-interference consists essentially of an enhanced spatial filter, demodulation, and decoding. The enhanced spatial filter may counteract the structured interference based on at least one of: an approximation error for computation of beamformer weights, a channel estimation, and an increased beamformer length. Similarly, the signal-processing mode associated with counteracting the structured extrinsic interference consists essentially of interference cancellation, demodulation, and decoding; while the signal-processing mode associated with counteracting the non-structured interference consists essentially of demodulation and decoding. In addition, if the interference has multiple sources, then at least one of the signal processing modes may be utilized to counteract the interference.

In an aspect of the disclosure, the determination of the source of the interference in method 600 may be

based on at least one of: a power of the signal and a power of the interference; a channel estimate of the signal; a channel estimate error of the channel estimate of the signal; the special filter weight vector; and a total power of distortions estimate of the signal.

**[0043]** Accordingly, structured extrinsic interference, e.g., a different signal intended for another mobile communications device, such as a base station or UE, may be determined as the source of the interference when a ratio of the power of the signal and the power of the interference is below a first predetermined threshold or when a model error sensitivity is above a second predetermined threshold. The model error sensitivity may be based on the spatial filter weight vector and steering vector towards the signal, in which the steering vector may be based on the channel estimate. In an aspect of method 600, the structured self-interference, which may be a multipath component of the signal, may be determined as the source of the interference when the power of the interference is within a predetermined deviation from the total power of distortions estimate, while the non-structured interference, e.g., noise, may be determined as the source of the interference when a ratio of the power of the signal and the total power of distortions estimates is below a predetermined threshold.

**[0044]** While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims, and all changes within the meaning and range of equivalency of the claims are therefore intended to be embraced.

## Claims

**1.** A mobile communications device comprising:
a receiver configured to:

receive a signal;
apply a spatial filter to the signal;
measure interference of the signal after applying the spatial filter;
determine if the interference is above a predetermined threshold;
determine a source of the interference when the interference is above the predetermined threshold from at least one of a non-structured interference, a structured self-interference, and a structured extrinsic interference; and
counteract the interference with a signal-processing mode corresponding to the previously determined source of the interference,
wherein the signal-processing mode associated with counteracting the structured self-interference consists essentially of an enhanced spatial filter, demodulation, and decoding and
wherein the signal-processing mode associated with counteracting the structured extrinsic interference consists essentially of interference cancellation by techniques that detect interferer symbols, reconstruct interferer waveforms, and subtract interferer components from received waveforms; demodulation; and decoding.

**2.** The mobile communications device according to Claim 1,
wherein the enhanced spatial filter counteracts the structured interference based on at least one of: an approximation error for computation of beamformer weights, a channel estimation, and an increased beamformer length.

**3.** The mobile communications device according to any one of Claims 1 and 2,
wherein the signal-processing mode associated with counteracting the non-structured interference consists essentially of demodulation and decoding.

**4.** The mobile communications device according to any one of Claims 1-3,
wherein determination of the source of the interference is based on at least one of:

a power of the signal and a power of the interference;
a channel estimate of the signal;
a channel estimate error of the channel estimate of the signal;
the special filter weight vector; and
a total power of distortions estimate of the signal.

**5.** The mobile communications device according to Claim 4,
wherein the structured extrinsic interference is determined as the source of the interference when a ratio of the power of the signal and the power of the interference is below a first predetermined threshold or when a model error sensitivity is above a second predetermined threshold.

**6.** The mobile communications device according to any one of Claims 4 and 5,
wherein the structured self-interference is determined as the source of the interference when the power of the interference is within a predetermined deviation from the total power of distortions estimate.

**7.** A method of controlling a receiver, the method comprising:

receiving a signal;
applying a spatial filter to the signal;
measuring interference of the signal after apply-

ing the spatial filter;

determining if the interference is above a predetermined threshold;

determining a source of the interference when the interference is above the predetermined threshold from at least one of a non-structured interference, a structured self-interference, and a structured extrinsic interference; and

counteracting the interference with a signal-processing mode corresponding to the previously determined source of the interference, wherein the signal-processing mode associated with counteracting the structured self-interference consists essentially of an enhanced spatial filter, demodulation, and decoding and wherein the signal-processing mode associated with counteracting the structured extrinsic interference consists essentially of interference cancellation by techniques that detect interferer symbols, reconstruct interferer waveforms, and subtract interferer components from received waveforms; demodulation; and decoding.

8. The method according to Claim 7,
wherein the enhanced spatial filter counteracts the structured interference based on at least one of: an approximation error for computation of beamformer weights, a channel estimation, and an increased beamformer length.

9. The method according to any one of Claims 7 and 8, wherein the signal-processing mode associated with counteracting the non-structured interference consists essentially of demodulation and decoding.

10. The method according to any one of Claims 7-9, wherein determining the source of the interference is based on at least one of:

determining a power of the signal and a power of the interference;
determining a channel estimate of the signal;
determining a channel estimate error of the channel estimate of the signal;
determining the special filter weight vector; and
determining a total power of distortions estimate of the signal.

11. A receiver configured to perform the method of any one of Claims 7-10.

**Patentansprüche**

1. Mobiles Kommunikationsgerät, das Folgendes umfasst:
einen Empfänger, der für Folgendes ausgelegt ist:

Empfangen eines Signals;
Anwenden eines Raumfilters auf das Signal;
Messen der Interferenz des Signals nach Anwenden des Raumfilters;
Bestimmen, ob die Interferenz über einem vorbestimmten Schwellenwert liegt;
Bestimmen einer Quelle der Interferenz, wenn die Interferenz über dem vorbestimmten Schwellenwert liegt, von mindestens einem Element einer nicht strukturierten Interferenz, einer strukturierten Eigeninterferenz und einer strukturierten extrinsischen Interferenz; und
Entgegenwirken der Interferenz mit einem Signalverarbeitungsmodus, welcher der zuvor bestimmten Quelle der Interferenz entspricht,
wobei der mit dem Entgegenwirken der strukturierten Eigeninterferenz verbundene Signalverarbeitungsmodus im Wesentlichen aus einem erweiterten Raumfilter, Demodulation und Decodierung besteht; und
wobei der mit dem Entgegenwirken der strukturierten extrinsischen Interferenz verbundene Signalverarbeitungsmodus im Wesentlichen aus Interferenzunterdrückung durch Techniken besteht, die Störersymbole erkennen, Störerwellenformen rekonstruieren und Störerkomponenten von empfangenen Wellenformen subtrahieren; Demodulation; und Decodierung.

2. Mobiles Kommunikationsgerät gemäß Anspruch 1, wobei der erweiterte Raumfilter der strukturierten Interferenz entgegenwirkt, basierend auf mindestens einem der folgenden Punkte: einem Näherungsfehler für Berechnung von Strahlformergewichten, einer Kanalschätzung und einer erhöhten Strahlformerlänge.

3. Mobiles Kommunikationsgerät gemäß einem der Ansprüche 1 und 2,
wobei der mit dem Entgegenwirken der nicht strukturierten Interferenz verbundene Signalverarbeitungsmodus im Wesentlichen aus Demodulation und Decodierung besteht.

4. Mobiles Kommunikationsgerät gemäß einem der Ansprüche 1-3,
wobei die Bestimmung der Quelle der Interferenz auf mindestens einem der folgenden Punkte basiert:

einer Leistung des Signals und einer Leistung der Interferenz;
einer Kanalschätzung des Signals;
einem Kanalschätzungsfehler der Kanalschätzung des Signals;
dem speziellen Filtergewichtsvektor; und
einer Gesamtleistung der Verzerrungsschätzung des Signals.

**5.** Mobiles Kommunikationsgerät gemäß Anspruch 4, wobei die strukturierte extrinsische Interferenz als die Quelle der Interferenz bestimmt wird, wenn ein Verhältnis der Leistung des Signals und der Leistung der Interferenz unter einem ersten vorbestimmten Schwellenwert liegt, oder wenn eine Modellfehlerempfindlichkeit über einem zweiten vorbestimmten Schwellenwert liegt.

**6.** Mobiles Kommunikationsgerät gemäß einem der Ansprüche 4 und 5, wobei die strukturierte Eigeninterferenz als die Quelle der Interferenz bestimmt wird, wenn die Leistung der Interferenz innerhalb einer vorbestimmten Abweichung von der Gesamtleistung der Verzerrungsschätzung liegt.

**7.** Verfahren zum Steuern eines Empfängers, wobei das Verfahren Folgendes umfasst:

Empfangen eines Signals;
Anwenden eines Raumfilters auf das Signal;
Messen der Interferenz des Signals nach Anwenden des Raumfilters;
Bestimmen, ob die Interferenz über einem vorbestimmten Schwellenwert liegt;
Bestimmen einer Quelle der Interferenz, wenn die Interferenz über dem vorbestimmten Schwellenwert liegt, von mindestens einem Element einer nicht strukturierten Interferenz, einer strukturierten Eigeninterferenz und einer strukturierten extrinsischen Interferenz; und
Entgegenwirken der Interferenz mit einem Signalverarbeitungsmodus, welcher der zuvor bestimmten Quelle der Interferenz entspricht, wobei der mit dem Entgegenwirken der strukturierten Eigeninterferenz verbundene Signalverarbeitungsmodus im Wesentlichen aus einem erweiterten Raumfilter, Demodulation und Decodierung besteht; und
wobei der mit dem Entgegenwirken der strukturierten extrinsischen Interferenz verbundene Signalverarbeitungsmodus im Wesentlichen aus Interferenzunterdrückung durch Techniken besteht, die Störersymbole erkennen, Störerwellenformen rekonstruieren und Störerkomponenten von empfangenen Wellenformen subtrahieren; Demodulation; und Decodierung.

**8.** Verfahren gemäß Anspruch 7, wobei der erweiterte Raumfilter der strukturierten Interferenz entgegenwirkt, basierend auf mindestens einem der folgenden Punkte: einem Näherungsfehler für Berechnung von Strahlformergewichten, einer Kanalschätzung und einer erhöhten Strahlformerlänge.

**9.** Verfahren gemäß einem der Ansprüche 7 und 8,

wobei der mit dem Entgegenwirken der nicht strukturierten Interferenz verbundene Signalverarbeitungsmodus im Wesentlichen aus Demodulation und Decodierung besteht.

**10.** Verfahren gemäß einem der Ansprüche 7-9, wobei das Bestimmen der Quelle der Interferenz auf mindestens einem der folgenden Punkte basiert:

Bestimmen einer Leistung des Signals und einer Leistung der Interferenz;
Bestimmen einer Kanalschätzung des Signals;
Bestimmen eines Kanalschätzungsfehlers der Kanalschätzung des Signals;
Bestimmen des speziellen Filtergewichtsvektors; und
Bestimmen einer Gesamtleistung der Verzerrungsschätzung des Signals.

**11.** Empfänger, der dazu ausgelegt ist, das Verfahren nach einem der Ansprüche 7-10 durchzuführen.

**Revendications**

**1.** Dispositif de communication mobile comprenant :

un récepteur configuré pour :

recevoir un signal ;
appliquer un filtre spatial au signal ;
mesurer l'interférence du signal après avoir appliqué le filtre spatial ;
déterminer si l'interférence est supérieure à un seuil prédéterminé ;
déterminer une source de l'interférence lorsque l'interférence est supérieure au seuil prédéterminé à partir d'au moins un élément parmi une interférence non structurée, une auto-interférence structurée, et une interférence extrinsèque structurée ; et
contrebalancer l'interférence avec un mode de traitement de signal correspondant à la source déterminée précédemment de l'interférence,

le mode de traitement de signal associé au contrebalancement de l'auto-interférence structurée consistant essentiellement en un filtre spatial amélioré, une démodulation, et un décodage et
le mode de traitement de signal associé au contrebalancement de l'interférence extrinsèque structurée consistant essentiellement en une annulation d'interférence par des techniques qui détectent des symboles brouilleurs, reconstruisent des formes d'onde brouilleuses, et soustraient des composants brouilleurs à partir de formes d'onde reçues ; démodulation ; et décodage.

2. Dispositif de communication mobile selon la revendication 1, dans lequel le filtre spatial amélioré contrebalance l'interférence structurée sur la base d'au moins un élément parmi : une erreur d'approximation pour un calcul de poids de formateur de faisceau, une estimation de canal, et une longueur de formateur de faisceau augmentée.

3. Dispositif de communication mobile selon l'une quelconque des revendications 1 et 2, dans lequel le mode de traitement de signal associé au contrebalancement de l'interférence non structurée consiste essentiellement en une démodulation et un décodage.

4. Dispositif de communication mobile selon l'une quelconque des revendications 1-3, dans lequel la détermination de la source de l'interférence est basée sur au moins un élément parmi :

   une puissance du signal et une puissance de l'interférence ;
   une estimation de canal du signal ;
   une erreur d'estimation de canal de l'estimation de canal du signal ;
   le vecteur de poids de filtre spatial ; et
   une puissance totale d'estimation de distorsions du signal.

5. Dispositif de communication mobile selon la revendication 4, dans lequel l'interférence extrinsèque structurée est déterminée comme la source de l'interférence lorsqu'un rapport entre la puissance du signal et la puissance de l'interférence est inférieur à un premier seuil prédéterminé ou lorsqu'une sensibilité d'erreur de modèle est supérieure à un deuxième seuil prédéterminé.

6. Dispositif de communication mobile selon l'une quelconque des revendications 4 et 5, dans lequel l'auto-interférence structurée est déterminée comme la source de l'interférence lorsque la puissance de l'interférence se situe dans un écart prédéterminé par rapport à la puissance totale de l'estimation de distorsions.

7. Procédé permettant de contrôler un récepteur, le procédé comprenant :

   recevoir un signal ;
   appliquer un filtre spatial au signal ;
   mesurer l'interférence du signal après avoir appliqué le filtre spatial ;
   déterminer si l'interférence est supérieure à un seuil prédéterminé ;
   déterminer une source de l'interférence lorsque l'interférence est supérieure au seuil prédéterminé à partir d'au moins un élément parmi une interférence non structurée, une auto-interférence structurée, et une interférence extrinsèque structurée ; et
contrebalancer l'interférence avec un mode de traitement de signal correspondant à la source déterminée précédemment de l'interférence,
le mode de traitement de signal associé au contrebalancement de l'auto-interférence structurée consistant essentiellement en un filtre spatial amélioré, une démodulation, et un décodage et
le mode de traitement de signal associé au contrebalancement de l'interférence extrinsèque structurée consistant essentiellement en une annulation d'interférence par des techniques qui détectent des symboles brouilleurs, reconstruisent des formes d'onde brouilleuses, et soustraient des composants brouilleurs à partir de formes d'onde reçues ; démodulation ; et décodage.

8. Procédé selon la revendication 7, dans lequel le filtre spatial amélioré contrebalance l'interférence structurée sur la base d'au moins un élément parmi : une erreur d'approximation pour un calcul de poids de formateur de faisceau, une estimation de canal, et une longueur de formateur de faisceau augmentée.

9. Procédé selon l'une quelconque des revendications 7 et 8, dans lequel le mode de traitement de signal associé au contrebalancement de l'interférence non structurée consiste essentiellement en une démodulation et un décodage.

10. Procédé selon l'une quelconque des revendications 7-9, dans lequel l'étape de détermination de la source de l'interférence est basée sur au moins un élément parmi :

   déterminer une puissance du signal et une puissance de l'interférence ;
   déterminer une estimation de canal du signal ;
   déterminer une erreur d'estimation de canal de l'estimation de canal du signal ;
   déterminer le vecteur de poids de filtre spatial ; et
   déterminer une puissance totale d'estimation de distorsions du signal.

11. Récepteur configuré pour exécuter le procédé de l'une quelconque des revendications 7-10.

**FIG. 1A**

100

201

225

150

125

250

101

**FIG. 1B**

101

102

110

104

106

108

## FIG. 2A

200A

125

150

250

225

101

201

## FIG. 2B

200B

150

250

125

225

101

201

**FIG. 3**

300

190

150

125B

125A

125

125B

125A

101

**FIG. 4**

400

125N

150

101

# FIG. 5

500

125

510

503

Received
waveforms

Beamformer for
desired signal

Mode 3:
Basic beamforming

512

514

Estimate
channels, signal,
interferer, and
noise powers

Compute
beamformer for
desired signal

Estimate total
power of
distortions

Decide whether receiver mode 3 is sufficient, or
whether either mode 1 or 2 should be activated

516

Mode 1: Interference cancellation

Mode 1 or 2

Mode 2: Beamforming w. advanced self-interf. suppression

501

502

# FIG. 6

600

601 | Receiving a signal

602 | Applying a spatial filter to the signal

603 | Measuring interference of the signal after applying the spatial filter

604 | Determining if the interference is above a predetermined threshold

605 | Determining a source of the interference when the interference is above the predetermined threshold from at least one of a non-structured interference, a structured self-interference, and a structured extrinsic interference

606 | Counteracting the interference with a signal-processing mode corresponding to the previously determined source of the interference

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150092621 A

**Non-patent literature cited in the description**

- **H. COX ; R. ZESKIND ; M. OWEN.** Robust Adaptive Beamforming. *IEEE Trans. Acoust. Speech, Signal Process.*, 1987, vol. 35 (10), 1365-1376